# EUROPEAN PATENT SPECIFICATION

(11) **EP 0 440 726 B1**
(45) Date of publication and mention of the grant of the patent: **04.01.1995**
(21) Application number: 89912350.9
(22) Date of filing: 05.10.1989
(51) Int. Cl.: C08L 21/00, C08J 5/04, D01F 6/60

(54) **SHORT FIBERS AND ELASTOMERIC COMPOSITION REINFORCED CONTAINING SHORT FIBERS**
KURZFASERN UND ELASTOMERE, VERSTÄRKTE ZUSAMMENSETZUNG MIT KURZFASERN
FIBRES COURTES ET COMPOSITION ELASTOMERE ARMEE LES CONTENANT

(30) Priority: 26.10.1988 US 263160; 20.09.1989 US 408588
(43) Date of publication of application: 14.08.1991
(73) Proprietor: AlliedSignal Inc., Morristown, New Jersey 07962-2245 (US)
(72) Inventor: PREVORSEK, Dusan, Ciril, Morris Township, NJ 07960 (US); KWON, Young, Doo, Mendham, NJ 07945 (US); BERINGER, Charles, W., Chester, VA 23813 (US); ROWAN, Hugh, Harvey, Midlothmian, VA 23113 (US)
(74) Representative: Brock, Peter William
(86) International application number: US8904471
(87) International publication number: WO9004617

(56) References cited:
- US-A- 3 969 568
- US-A- 4 014 969
- US-A- 4 389 361
- US-A- 4 711 285

## Description

This invention is in the field of fibers, elastomeric compositions and articles; more particularly, the invention relates to low modulus short fibers, elastomeric compositions comprising the elastomer and the short fibers, and articles comprising the composition.

US-A-4 389 361 contains a definition for the term elastomer as a substance that can be stretched at room temperature to at least twice its original length and, after having been stretched and the stress removed, returns with force to approximately its original length in a short time. (Glossary of terms as prepared by ASTM Committee D-11 on Rubber and Rubber-like materials, published by the American Society for Testing Materials).

Elastomers are also referred to in Billmeyer, Textbook of Polymer Science, second edition, John Wiley and Sons, Inc. (1971), at pages 242-243 and 533-550 hereby incorporated by reference. Elastomers are considered as a class of high polymers which are amorphous when unstretched and must be above the glass transition temperature to be elastic. Typically, elastomeric polymers have networks of crosslinks. Crosslinks can be obtained by a vulcanization process. Crosslinking transforms an elastomer from a weak thermoplastic mass into a strong elastic, tough rubber material.

An indication of the mechanical properties of elastomers is the measurement of elongation under load, commonly characterized by the stress-strain behavior of the rubber. As the load is increased and the elongation is measured a curve results which is considered the stress-strain curve of the rubber. The elongation of the rubber sample is measured with increased load. Correspondingly a stress-strain curve develops as the load is removed. Differences between the stress-strain curve during loading and unloading represent energy losses due to internal heat generation and are commonly called a hysteresis loss. As successive cycles take place, the changes to resistance to stretching, tensile strength, energy absorption, and permanent set become smaller.

A common type of testing is to subject elastomeric materials to cyclical mechanical stresses. Most materials fail at a stress considerably lower than that required to cause rupture in a single stress cycle. This phenomenon is called fatigue. Various modes of fatigue testing in common use include alternating tensile and compressive stress and cyclic flexural stress. Results are reported as plots of cyclic stress amplitude versus number of cycles to fail. Fatigue testing is reviewed in Billmeyer at page 128.

Elastomeric compositions can include a variety of additives to improve processing, crosslinking, physical properties and age resistance. Such additives include oil, vulcanization agents such as sulphur, acceleration aids to enhance vulcanization, and activators to attain the full effect of the organic accelerators. Elastomeric compositions have been filled with a variety of materials including oils and other fillers. Additionally, fillers are used as reinforcement agents to improve physical properties. A widely used form of filler in common rubbers is carbon black. Reference is made to the Vanderbilt Rubber Handbook for typical elastomeric compositions.

Attempts have been made to stiffen elastomeric compositions by incorporating short fibers. While the fiber stiffened the composition, it was deleterious to properties such as the ability to withstand cyclic strain (fatigue).

Patents disclosing fiber reinforced polymer composites include US-A-4 389 361, 4 728 698, 4 711 285, 4 393 154, 4 014 969 and 3 969 568. The patents of interest relating to fiber loaded rubber compositions generally disclose that fibrous reinforcements are used to stiffen, and strengthen elastomeric compositions.

US-A-4 389 361 discloses a process for molding fiber loaded rubber compounds. This patent is directed to an elastomeric compound that has chopped fibers dispersed throughout the compound. The orientation of the chopped fibers within the rubber matrix increases the modulus and strength of the compound. The orientation is achieved by milling the fiber loaded compound to break up the fibers and thereafter mold and then vulcanize the resulting product. The filaments are initially approximately 1.6 inches (40.6 mm) in length and have a diameter of 11 µm. The resulting composition has fibers of small length of approximately 0.125 inches (3.2 mm). The fibers are used as a reinforcing additive to improve physical properties such as tensile strength and to stiffen the composition by reducing elongation and increasing the "low strength modulus". US-A-4 711 285 discloses a bead filler composition which contains short fiber of an organic polymer. It can be from 15 to 70 parts the short fiber based on the rubber. Short fibers are used to increase the elastic modulus of the rubber.

US-A-4 393 154 discloses a process for blending 5 to 50% by weight of a chopped fiber from 0.4 to 1.3 cm in length with 95 to 50% by weight of a particulate unvulcanized rubber. It is a goal of this patent to improve uniform mixing of fibers and rubber.

US-A-3 969 568 discloses aramid flock reinforcement of rubber using a particular adhesive. The composition is disclosed to contain rubber and adhesive compositions and a fibrous reinforcement. The composition has improved physical properties such as compression modulus and lower elongation, and a stiffer rubber.

Elastomeric compositions are known to be useful to make a variety of articles including tires, rubber hose, power tranmission belts (V-belts), flat conveyor belts, and mechanical rubber goods such as engine mounts and vibration suppressors. Typical compositions for such articles are disclosed in Babbit, The Vanderbilt Rubber Handbook, R.T. Vanderbilt Company, Inc. Chapter 11, pp. 644-810 (1988).

The present invention provides an elastomer composition containing 1 to 25 parts by weight per hundred (phr) of a polyamide fiber from 0.1 to 1.0 inches (2.5-25.4 mm) long having a birefringence value of from 0.02 to 0.04. The fiber preferably has a fiber modulus of less than 1x10¹¹ dyne/cm² (10 GPa) and more preferably less than 0.6x10¹¹ dyne/cm² (6 GPa). The polyamide is preferably selected from polycaprolactam and poly(hexamethylene adipamide).

The polyamide fibers comprise from 1 to 25 per hundred parts by weight of elastomer (rubber) (phr), preferably from 2 to 10 phr, and more preferably 4 to 6 phr by weight based on the elastomer, and are from 0.1 to 1 inches (2.5 to 25.4 mm) long, more preferably from 0.125 to 1 inches (3.2 to 25.4 mm) long, and most preferably from 0.25 to 0.5 inches (6.4 to 12.7 mm) long.

Preferably, the fiber in general has a fiber modulus of less than 1x10¹¹ dyne/cm² (10 GPa) as measured by ASTM-D 2256-80. The fiber is a polyamide fiber having a birefringence value of 0.02 to 0.04. The birefringence value is a measure of molecular orientation effected by drawing or stretching. The birefringence is measured according to ASTM 858-82.

The composition of the present invention has a sufficient amount of a polyamide fiber having a birefringence value of from 0.02 to 0.04 to result in the composition having a greater fatigue life, as measured according to modified ASTM-D 3479-76 when compared to a composition without the fiber.

The orientation should be low enough to have equal or better fatigue resistance as the composition without the short fiber, but high enough to improve the stiffness (modulus) of the elastomeric composition.

The composition can additionally contain other additives conventionally used in elastomeric composition including but not limited to processing aids, crosslinking agents including curing agents, accelerators and other types of curing promoters, and age resistors. The composition can comprise other types of fillers such as particulate fillers including carbon black as well as extenders such as oil.

The present invention also includes articles made of the above recited composition. Such articles include tires, hose power transmission belts, conveyor belts and various mechanical goods. By mechanical goods it is meant all other applications including motor mounts, gaskets, seals, vibration suppressors, and the like.

Compositions useful to make the articles or components of the articles comprise an elastomer; from 25 to 175 parts per hundred parts of rubber (phr) of a filler; and up to 25 phr of a polyamide fiber up to 1.0 inches (25.4 mm) long having a sufficient molecular orientation resulting from the birefringence value to result in the article having a greater fatigue, according to ASTM-D 3479-76 when compared to the article comprising the article without fiber. For the purpose of the present invention this fiber is considered a separate component from a "filler".

Useful compositions for articles of the present invention include compositions known in the art such as disclosed in the Vanderbilt Rubber Handbook, supra. further including up to 25, preferably from 1 to 25, and more preferably 2 to 10 phr of the fiber.

Specific compositions and related articles include tire rubber compositions and tires comprising at least one component made of the composition; hose rubber compositions and hose; power transmission belts made of the compositions and belts, coveyer belt compositions and belts made of the compositions

Figure 1 is a graph of the heat generation rate, 10 J/cm³/sec versus temperature.

Figure 2 is a cross-sectional drawing of a portion of a tire section.

The present invention a composition comprising an elastomer and from 1 to 25 phr of fiber from 0.1 to 1.0 inches (2.5 to 25.4 mm) in length. The fiber modulus is preferably less than 1x10¹¹ dynes/cm² (10 GPa) preferably less than 0.6x10¹¹ dynes/cm² (6 GPa) and more preferably from 0.1 to 0.6x10¹¹ dynes/cm² (1 to 6 GPa). The composition has equal or better fatigue resistance and is stiffer than the elastomeric composition without the fiber.

The improvement can be obtained by controlling the degree of molecular orientation attained during drawing or stretching of the fiber. This property is measured as the birefringence of the fiber.

The composition is preferably a homogeneous distribution of fibers in the elastomeric composition matrix. Preferably, the fibers are randomly oriented. However, the fibers can be oriented. Such orientation can occur or be induced during processing the elastomeric composition. The composition can be made by methods such as coagulation of the elastomer in the presence of the fiber and other components of the composition. The composition can be solution blended. Preferably, the composition is made by melt blending. The elastomeric composition comprising the elastomer and fibers can be cured or crosslinked in accordance with methods known in the art.

Typical conditions for vulcanizing natural rubber and/or synthetic rubber compositions including styrenebutadiene rubber compositions are to heat the composition during molding to temperatures of from 250°F to 400°F (121 to 204°C) under pressure of greater than 150 psi (1.13 MPa) preferably greater than 200 psi (1.48 MPa) and typically from 200 to 400 psi (1.48 to 2.86 MPa). The time to vulcanize will vary depending on the size article being treated.

Elastomers useful in the composition of the present invention include elastomers as characterized above in the Background of the Invention. Elastomers include those disclosed in Billmeyer, Textbook of Polymer Science; Babbit, the Vanderbilt Rubber Handbook, published by the R.T. Vanderbilt Company, Inc., Connecticut, 1978, and the various U.S. Patents listed above including US-A-4 389 361.

Useful elastomers include but are not limited to natural rubber, synthetic polyisoprene, copolymers of styrene and butadiene, copolymers of butadiene and acrylonitrile, copolymers of butadiene and alkyl acrylates, butyl rubber, bromo butyl rubber, chlorobutyl rubber, neoprene (chloroprene, 2-chloro-1, 3-butadiene), olefinic rubbers such as ethylene propylene rubber (EPR) and ethylene propylene diene monomer (EPDM) rubbers, nitrile elastomers, polyacrylic elastomers, polysulfide polymers, silicone elastomers, thermoplastic elastomers, thermoplastic copolyesters, ethylene acrylic elastomers, vinyl acetate ethylene copolymers, epichlorohydrin, chlorinated polyethylene, and chemically crosslinked polyethylene, chlorosulfonated polyethylene, fluorocarbon rubber, fluorosilicone rubber, and mixtures thereof.

The fiber can be an fibrous material including monofilament yarn, or multi-filament yarn. Fibers useful in the composition of the present invention are short fibers 0.1 to 1 inch, more preferably 0.125 to 1 inch (2.5 to 25.4 mm) long and most preferably 0.25 to 0.5 inches (6.4 to 12.7 mm) long. There is from 1 to 25 phr preferably 2 to 10 phr, and more preferably 4 to 6 phr of the fiber in the composition of the present invention. The short fiber filaments are preferably homogeneously distributed in the elastomer. When multi-filament yarn is used, preferably the individual yarn filaments are dispersed.

The fiber filaments useful in the composition of the present invention typically have a diameter of from 0.0001 to 0.01 inches (2.54 to 254 µm), preferably 0.0004 to 0.002 inches (10.2 to 50.8 µm). typical multi-filament yarns contain from 50 to 1500 filaments, preferably 100 to 1000 filaments. The denier per filament is preferably from 1 to 25 (9 to 225 tex) preferably 2 to 10 (18 to 90 tex), where denier is grams per 9000 meters and tex is grams per 1000 m.

Polyamide fibers useful in the composition of the present invention are drawn or oriented in order to have a birefringence value of 0.02 to 0.04.

Birefringence is an optical term meaning double refraction. It is used in the examination of fibers to measure the degree of molecular orientation effected by stretching or drawing. For the purpose of the present invention birefringence values were measured in accordance with ASTM E 858-82.

The fiber nylon including nylon 6 (polycaprolactam) and nylon 6,6 (polyhexamethylene adipamide), with polycaprolactam being most preferred.

The polyamide useful as the short fiber of the present invention, has a molecular weight sufficient to form fiber. Preferably, the molecular weight is from 10,000 to 40,000 preferably 20,000 to 35,000 number average molecular weight as measured by membrane osmometry. As noted, preferred polyamides include polycaprolactam and poly(hexamethylene adipamide). Generally, polyamides are polyamides capable of forming fiber selected from the long chain synthetic polymers which have regularly occurring amide groups. Useful polyamides can be prepared by polymerization of difunctional monomers or equivalently, their cyclized lactam; or by the reaction of a conjugate pair of monomers for example diamide and dicarboxylic acid, or a linear aminoaliphatic acid such as omega-amino undecanoic acid.

Suitable poylactams can be produced by polymerization of lactam molecules of the formula 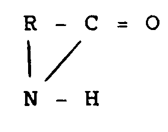
where R is an alkylene group having 3 to 12, preferably 5 to 12 carbon ions.

The polyamide fiber useful in the present invention is preferably spun and drawn in one process to an amount of drawing sufficient to be within a range of elongation to result in the birefringence values of 0.02 to 0.04. The fiber is considered to be only partially oriented yarn (POY). Typically, fibers are spun and quenched. Optionally this can be followed by a separate drawing step. In the present process there is a restriction on the total amount that the fiber is drawn. Undrawn fiber can also be used. The yarn can have a denier per filament of from 1 to 50 (9 to 450 tex). The yarn preferably has a denier per filament of from 1 to 10 (9 to 90 tex) more preferably from 2 to 8 (18 to 72 tex). The fiber is from 0.1 to 1.0 inches (2.5 to 25.4 mm) long, preferably from 0.1 to 0.250 inches (2.5 to 6.4 mm) long. The birefringence is from 0.02 to 0.04. The totaL amount by which the fiber is drawn, whether by stack drawing or in combination with a separate drawing step is such that the fiber modulus is less than 1x10¹¹ dyne/cm² (10 GPa), preferably less than 0.6x10¹¹ dyne/cm² (6 GPa).

The fiber can be cut by any suitable means to chop or cut fiber known in the art. A preferred method is to feed the yarn between two rolls. One roll has a plurality of knives parallel to the axis of the roll and perpendicular to the direction of the fiber. The other roll is a backing roll, preferably made of rubber. The knives press against and cut through the fiber as it presses to the nip of the rolls. The necessary pressure to accomplish the cutting is attained by the knives pressing against the fiber which presses against the backing roll.

Preferably the fiber is coated with an adhesive and/or the host matrix elastomeric composition contains an adhesive promoting material which enhances adhesion between the fiber and the host elastomeric composition.

Adhesive compositions known in the art to adhere fiber and fabrics to elastomeric compositions can be used. A preferred composition is based on resorcinol formaldehyde latex. This is preferred when using nylon fiber. When using fiber such as polyester a diisocyanate-epoxy composition is preferred. The diisocyanate-epoxy composition can be used to coat polyester fiber followed by a coating with the resorcinol formaldehyde latex composition. The diisocyanate-epoxy composition is first applied to the fiber and can adhere to resorcinol formaldehyde latex which is used as a second coating. The resorcinol formaldehyde latex can then adhere to the elastomeric composition. The resorcinol formaldehyde latex can be used alone with fibers such as nylon.

The composition of the present invention results in an elastomeric compound that has equal or greater fatigue life as measured by a cyclic strain test such as the modified ASTM-D-3479-76 test compared to the composition without the fiber.

The modified ASTM-D-3479-76 test, Method B, was used to measure the fatigue resistance of oriented fiber in resin matrix composites. A sample was prepared from a composition formed into a sheet on a laboratory mill roll. The composition is vulcanized (crosslinked). The sample was 0.6 cm high, and 1 cm wide. The length of the sample was in the milling direction or longitudinal direction of the sheet off of the mill. The sample is long enough so that there is a length of 2 cm between clamps. Fatigue condition used are: strain amplitude; 8.5%; pre-tension force, 8kg; frequency 10Hz, and 130°C. Results are reported in cycles to break.

The short fibers improve the stiffness of the composition. Stiffness is indicated by yarn modulus. Modulus and other tensile properties of the yarn were measured in accordance with ASTM-D-2256-80. There is improved resistance to interface failure between the fiber and rubber due to the use of the adhesive system as well as the properties of the fibers. It is believed that by using the yarn of the present invention, the properties of the fibers are closer to that of the matrix composition that otherwise.

The composition of the present invention has lower heat generation upon cyclic tensile straining. The amount of heat generation during cyclic straining is measured as the hysteresis loss. The hysteresis loss is the area in a loop on a stress v. strain curve. A sample is stressed to a given strain. The stress is removed. A loop is formed between the stress v. strain curve upon straining the sample and the stress v. strain curve upon the stress being released. The area of this loop is lost energy which is characterized as hysteresis energy resulting in heat generation. The heat generation of the sample of the present invention was measured using an Allied High Strain Dynamic Viscoelestometer made by RJS Corporation of Akron, Ohio. A sample made in the same manner as that used in the modified ASTM-D-3479-76 fatigue test is clamped with a sample 2 cm long between clamps. The sample is cyclically strained ± 2% at a rate of 10 cycles per minute. The temperature is raised from room temperature to 160°C at 2°C/min. The stress strain curve is read on an oscilloscope and the heat generation in erg/cc/sec 10⁻⁷J/cm³/s (corrected for modulus) is measured. Preferably, the composition of the present invention has lower heat generation than a composition which is equivalent except that it does not contain the fiber used in the composition of the present invention.

The fiber of the present invention can be uniformly or randomly aligned in the elastomeric matrix. The fiber can be oriented within the composition by processing such as calandering.

The present invention results in a composition which has improved flexibility, low heat generation and improved resistance to fatigue as well as improved elongation to break. This is attributed to the fiber having the claimed modulus and/or birefringence values, resulting in lower modulus and longer breaking elongation. The fiber has improved flexibility. There is less stress concentration at the fiber-rubber. interface during cyclic straining. The composition is useful in a variety of rubber products which undergo continual cyclic stress including compositions used in tires and in hose.

The present invention includes articles made of the above recited composition. Such articles include tires, hose power transmission belts, conveyor belts and various mechanical goods which includes other applications such as motor mounts, gaskets, seals, vibration suppressors, and the like.

Compositions useful to make the articles or components of the articles comprise the elastomer; from 25 to 175 phr of a filler; and 1 to 25 phr of the fiber. For the purpose of the present invention, this fiber is considered a separate component than "filler".

Preferred fillers include carbon black, silicon dioxide, and zinc oxide. Useful carbon blacks include those reviewed at pages 407-428 of The Vanderbilt Rubber Handbook, supra. Useful silicon dioxide includes clays and fumed silica. Useful clays are listed at pages 429-432 of The Vanderbilt Rubber Handbook, supra.

The compositions of the present invention can include other materials commonly used in rubber compositions. Such materials include vulcanizing agents, curing accelerators, accelerator activators and retarders, antioxidants, antiozonants, processing aids, extenders (oil) plasticizers, softeners and tackifiers.

Vulcanizing agents include sulfur, sulfur bearing accelerators, and organic peroxides. Accelerators include thiazole, sulfonamide, morpholine based accelerators, and ultra accelerators such a metal dithiocarbamates, thiurams and xanthates. Activators can include zinc oxides in amounts up to 10 phr (larger amounts can be used and the zinc oxide is a filler). Other activators include alkaline compounds such as litharge, magnesia, amines, certain precipitated calcium carbonates, and the like. Cure retarders include materials such as phthalic anhydride, salicylic acid and sodium acetate. Antioxidant compounds includes amines, phenols and phosphites. Antiozanants include paraphenylenediamine derivatives, and various waxy materials. These materials are generally known in the art and reviewed in The Vanderbilt Rubber Handbook, supra.

A composition useful in tires comprises at least one elastomer selected from the group consisting of styrene butadiene rubber, polybutadiene, rubber, natural rubber, synthetic polyisoprene, EPR, EPDM; from 25 to 100 phr of at least one filler selected from the group consisting of carbon black, and silicon dioxide; at least one curing agent; and from 1 to 25 phr of the. The composition can be used in at least one component of the tire.

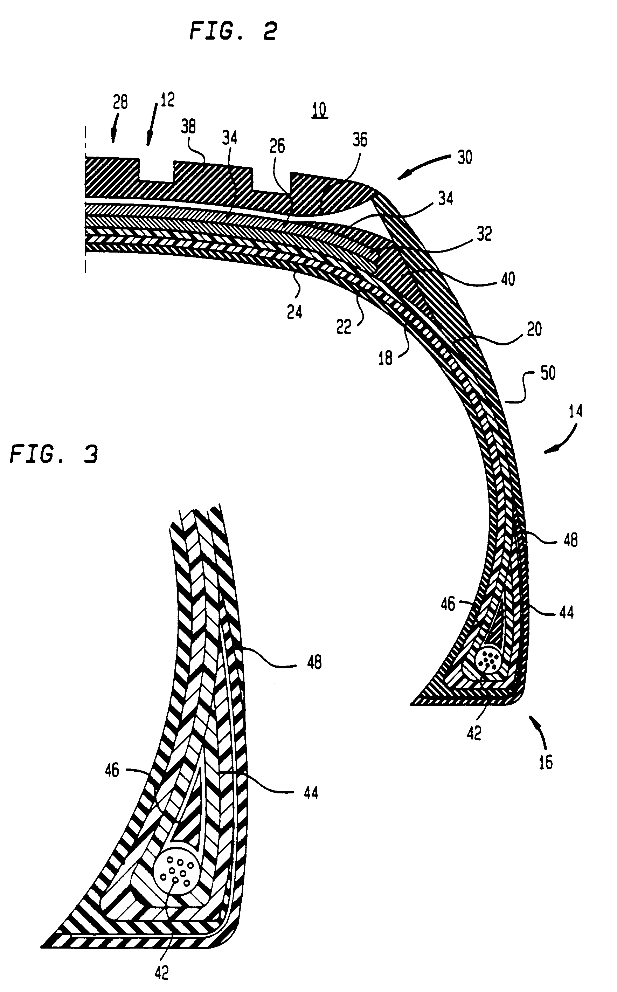

Figure 2 is a partial cross-sectional view of a typical passenger tire 10. Such tires and their various components are known in the art. For the purposes of the present invention a tire is a toroidal shaped article the elements of which can be made of different rubber based compositions, or fiber rubber composites with long fiber embedded or coated with a rubber composition. The tire can be divided into a tread portion 12, a sidewall portion 14 and a bead portion 16. The tire 10 has a carcass 18 which is long fiber embedded in a rubber coat composition. There are typical two fibrous layers in the carcass in a passenger tire. The carcass has an outside surface 20 and an inside surface 22. In tubeless tires there is a inner liner 24 molded adjacent to the inside surface 22. A belt 26 is located adjacent to the carcass 18 in the tread portion 12 and extends circumferentially around the tire. The belt is made of long relatively stiff fiber embedded in a belt coat compound. There can be at least one belt layer and there are typically two belt layers in a passenger tire.

The tread portion 12 has a crown 28 and a shoulder 30. The belt 26 extends generally from shoulder to shoulder of the tire. In each shoulder 30 the belt has a circumferential belt edge 32. There can be a belt overlay 34 on the side of the belt opposite to the carcass 18. This is a layer of long fibers embedded in a rubber composition. The overlay composite is not as stiff as the belt in order to make transition from the belt to the undertread.

Adjacent to the overlay on the side opposite the carcass 18 is an undertread 36 and adjacent to the undertread is the tread 38. The undertread 36 and the tread 38 extend circumferentially around the tire in the tread portion 12.

There can be a belt edge cushion 40 located at each belt edge 32 and extending circumferentially around the tire. This helps to cushion the stiff and sometimes sharp belt edge to prevent the tire from separating at that location.

The carcass 18 extends from the tread portion 12 to the sidewall portion 14 and turns up around the bead 42 in the bead portion 16. The portion of the carcass 18 which turns up is called the turn-up 44. There can be a rubber compound above the bead 42. This is called the bead filler 46. At the outside surface of the turn-up 44 there can be a fabric embedded in a rubber coat or matrix composition. This helps to protect and maintain the turn-up. This element is called the chaffer 48.

On the outside of the carcass 18 between the shoulder and the bead 16 is a sidewall 50.

The fiber of the present invention can be including the rubber compositions useful in various tire components including the tread, overlay, belt edge, bead filler, chaffer, sidewall and belt coat.

Useful compositions to make hose rubber comprise at least one elastomer selected from the group consisting of natural rubber, EPR, EPDM, styrene butadiene rubber, nitrile rubber, and synthetic polyisoprene; from 25 to 175 phr of at least one filler selected from carbon black, zinc oxide, and silicon dioxide; at least one curing agent; and from 1 to 25 phr of the fiber.

Useful compositions to make power transmission belt comprising at least one elastomer selected from the group consisting of choroprene rubber, styrene butadiene rubber, natural rubber, and synthetic polyisoprene; from 25 to 100 phr of at least one filler selected from carbon black, silicon dioxide, and zinc oxide; at least one curing agent; and a composition comprising an elastomer and from 1 to 25 phr of the fiber.

Useful compositions to make conveyor belts comprise at least one elastomer selected from the group consisting of natural rubber, synthetic polyisoprene, polybutadiene, epichlorohydrin, chloroprene, EPR. EPDM, nitrile rubber, and butyl rubber; from 25 to 100 phr of at least one filler selected from the group consisting of carbon black, silicon dioxide, and zinc oxide; at least one curing agent; and from 1 to 25 phr of the fiber.

Several examples are set forth below to illustrate the nature of the invention and the manner of carrying it out. However, the invention should not be considered as being limited to the details thereof. All parts are by weight unless otherwise indicated.

### Examples

A useful method to make fiber of the present invention is to extrude polycaprolactam having a nominal formic acid viscosity (FAV) of about 90 through a conventional spinning pot having a round pack filter and a spinnerette. The spinnerette had 204 capillaries. The capillary dimensions were 0.040 inches (1.02 mm) length x 0.040 inches (1.02 mm) diameter. The extrusion temperature was 265°C ± 3°C and the take-up speed was about 2800 meters per minute. The fiber was quenched with air using a radial inflow quench as the filaments travel down through a quench stack (tube). The stretching or drawing of the fiber occurred while it was moving through the stock. The amount of draw was controlled by the ratio of polymer throughput to the take up speed of the fiber. A throughput of 48 pounds (21.8 Kg) per hour produced a 6 denier per filament (dpf) (54 tex/filament) product. A throughput of 60 pounds (27.2 Kg) per hour produced an 8 dpf (72 tex/filament) product. Lubricating oils were applied using a finished applicator roll, and the yarn taken up on a speed controlled winder.

### Examples 1-7

Following are examples of polycaprolactam fibers useful in the present invention. The fibers of Examples 1-6 were made from polycaprolactam having a nominal FAV of about 90. Examples 1 and 3 were made using the above described process. Example 2 was made using a modified spinnerette to produce a fiber with about 3 dpf. The fiber of Example 7 (Comparative) was made of fiber grade poly(ethylene terephthalate) having a nominal intrinsic viscosity of about 0.90.

Examples 1-3 were nylon 6 fibers only drawn as they moved through the stack. Examples 4 and 5 (Comparative) were nylon 6 fiber which were initially undrawn at low stack drawn (estimated take-up speed of 300-500 meters per minute). This had a birefringence value of about 0.015. This yarn was then drawn in a separate step using pairs of godet rolls with speeds selected such that the draw ratio was about 2:1. Draw ratio is the final unit length divided by the original unit length. Example 6 (Comparative) is nylon 6 fiber drawn to about 90% of its maximum draw ratio in a separate step after leaving the stock. The draw ratio was between 4:1 and 5:1. This is typical of high strength nylon 6 used for tire cords. Example 7 (Comparative) is poly(ethylene terephthalate) (PET) fiber only drawn as it moved through the stock to give equivalent elongation and tensile strength to the Examples 1-3.

Stress strain properties were measured according to ASTM-2256-80. Free shrink was measured according to ASTM-885-85. Birefringence was measured according to ASTM-858-82. In Table 1 the following abbreviations were used: BIREFRIN - birefringence; DPF - denier per filament; UTS - ultimate tensile strength; and Free Sh - free shrinkage. The results are summarized in Table 1 below:

**Table I**

| EXAMPLE | DPF (tex/ filament) | BREFRIN. | UTS g/D (10⁹dyne/cm² = 10⁻¹ GPa) | UE (%) | MODULUS g/d (10¹¹dyne/cm² (= 10 GPa) | FREE SH (%) |
|---|---|---|---|---|---|---|
| Ex 1 | 8.2 (73.8) | 0.03722 | 3.9 (3.94) | 54 | 22 (0.223) | 4.8 |
| Ex 2 | 2.8 (25.2) | 0.03806 | 4.1 (4.15) | 46 | 20 (0.203) | 4.3 |
| Ex 3 | 6.6 (59.4) | 0.02702 | 2.3 (2.33) | 90 | 23 (0.233) | 3.9 |
| Ex 4^{x} | 5.6 (50.4) | 0.04698 | 3.0 (3.04) | 58 | 19 (0.177) | 4.7 |
| Ex 5^{x} | 2.0 (18.0) | 0.04126 | 2.2 (2.23) | 58 | 20 (0.203) | 4.3 |
| Ex 6^{x} | 6.6 (59.4) | 0.055-0.060 | 8.8 (8.92) | 18 | 40 (0.406) | 13.5 |
| Ex 7^{x} | 2.4 (21.6) | 0.10-0.12 | 3.2 (3.76) | 55 | 72 (0.845) | 0.7 |

| | | | | | | |
|---|---|---|---|---|---|---|
| ^{x} = Comparative | | | | | | |

Example 8-14

The fibers of Examples 1-7 were coated with a resorcinol formal dehyde latex (RFL) adhesive system in a single end treating unit. Example 7 was precoated with a diisocyanate epoxy composition. The resulting fibers were then cut to 1/4 inch (6.4 mm) length. The cut fibers were melt blended in a rubber composition using a laboratory internal mixer. The composition contained 100 phr natural rubber (parts per hundred of rubber), 70 phr of filler (carbon black and silica); a resorcinol bonding agent, a cobalt salt additive; 5 phr pine tar and a sulfur and sulfonamide curing system. Each example contained 6 phr of fiber. The melt blended composition was cured at 290°F (143°C) for 90 minutes into sheets useful for testing for fatigue resistance according to the modified ASTM D3479-76 test reviewed above. Tear testing was conducted according to ASTM D3182. Results are summarized in Table 2 below. Comparative 1 (Comp 1) was the rubber composition without any short fiber.

**Table 2**

| Ex | Fiber From Ex | Fatigue Resist. 10⁶ Cycles to Break | Tear (psi/MPa) |
|---|---|---|---|
| Comp 1 | | 0.43 | |
| 8 | 1 | 0.54 | 482/3.32 |
| 9 | 2 | 0.52 | 365/2.52 |
| 10 | 3 | 0.50 | 333/2.30 |
| 11^{x} | 4 | 0.40 | 333/2.30 |
| 12^{x} | 5 | 0.30 | 348/2.40 |
| 13^{x} | 6 | 0.39 | |
| 14^{x} | 7 | 0.15 | 287/1.98 |

| | | | |
|---|---|---|---|
| ^{x} Comparative) | | | |

Examples 15-16

Compositions were made based on the same rubber composition as in Examples 8-14 above using the same process. Example 15 contained the same nylon 6 as used in Example 1. Example 16 (Comparative) contained the fully drawn nylon 6 as used in Example 6 (Comparative). Comparative 2 was the rubber composition without short fiber. Comparatives 3-5 were compositions containing fibers having a fiber modulus of greater than 1x10¹¹ dyne per square cm (10 GPa) according to ASTM D2258-80. Comparative 3 contained Santoweb® cellulose fiber mode by Monsanto. Comparative 4 was PET fiber having and intrinsic viscosity of about 0.9 spun and drawn to a draw ratio of between 4:1 and 5:1. Comparative 5 was Kevlar® polyaramide, grade 29 fiber sold by DuPont. All of the fiber was about 1/4 inch (6.4 mm) in length.

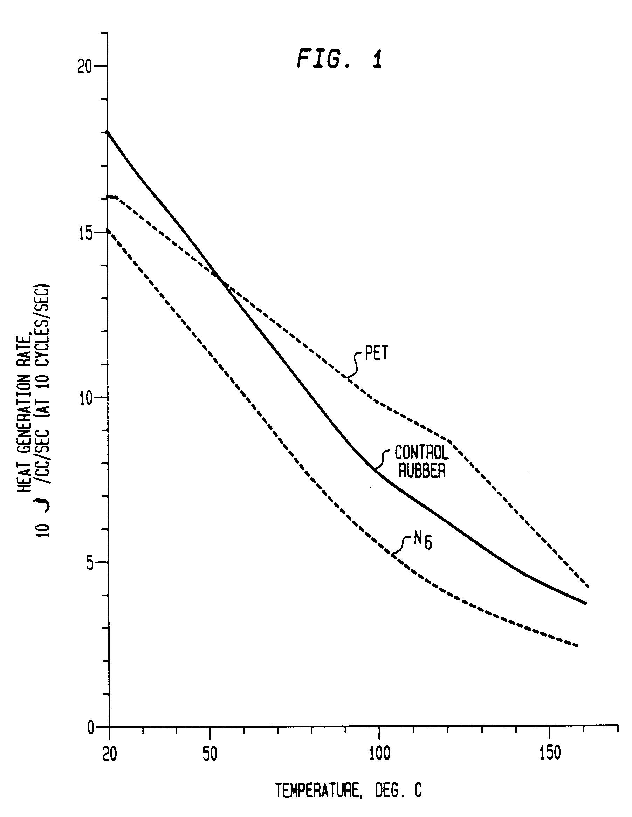

The compositions were tested for fiber modulus according to ASTM-D 2256-89; fatigue resistance according to modified ASTM-D 3479-76. and Examples 15 and 16 (Comparative) and Comp 2 for heat generation according to the process recited above. The fiber modulus and fatigue resistance are reported in Table 3 below. The heat generation results are shown in Figure 1 for Ex. 16 (Comparative) (N6), Comp. 2 (rubber composition without fiber), and Comp. 4 (PET). The testing conditions included testing in at a strain amplitude of 2%, at 10 cycles per second, in the longitudinal fiber direction. Results are corrected for modulus, and reported.

**Table 3**

| | Fatigue Resist. 10⁶ Cycles to Break | Fiber Modulus 10¹¹ dyne/cm² (GPa) |
|---|---|---|
| Ex 15 | 0.756 | 0.6 (6) |
| Ex 16 | 0.387 | 0.6 (6) |
| Comp 2 | 0.324 | 0.0013* (0.013) |
| Comp 3 | 0.096 | 1.7 (17) |
| Comp 4 | 0.017 | 1.3 (13) |
| Comp 5 | 0.015 | 6.4 (64) |

| | | |
|---|---|---|
| *rubber tested without fiber | | |

A review of Table 2 and 3 show that where the fiber modulus was lower than 1x10¹¹ dynes/cm² (10 GPa) the fatigue resistance was equal to or better than the comparative rubber without fiber. When nylon 6 fiber has a birefringence value below 0.05 the fatigue resistance was much better than the control.

### Examples 17-29

The following compositions useful in the indicated articles, disclosed in The Vanderbilt Rubber Handbook, supra, (VRH) can additionally contain 5, 10, or 15 phr of polyamide fiber from 0.1 to 0.5 inches (2.5 to 12.7 mm) long and having a birefringence value of from 0.02 to 0.04. Amounts are in parts by weight.

Trademarks, standard names, grades, and common names of materials are defined in VRH. Following is a brief summary of the designations used:
- NR: natural rubber
- IR: synthetic polyisoprene
- SBR: styrene butadiene rubber
- BR: polybutadiene rubber
- SMR: Standard Malaysian Rubber
- CR: neoprene (chloroprene)
- EPR: ethylene propylene rubber
- EPDM: ethylene propylene diene monomer rubber
- CBTS: DURAX;
N-cyclohexyl-2-benzothiazolesulfenamide
- OBTS: AMAX; N-oxydiethylenebenzothiazole-2-sulfenamide
- MBTS: ALTAX; benzothiazyl disulfide
- MBSS: MORFAX; 4-morpholinyl-2-benzothiazole disulfide
- TMTD: METHYL TUADS; Tetramethylthiuram disulfide
- VANAX NS: N-tert-butyl-2-benzothiazolesulfenamide
- ETHYL TUADS: Tetraethylthiuram disulfide
- VANAX NP: Activated thiadiazine
- VANAX A: 4,4'-dithiomorpholine
- MBT: CAPTAX; mercaptobenzothiazole
- TMTM: UNADS; Tetramethylthiuram monsulfide
- TDEDC: ETHYL TELLURAC; tellurium diethyldithiocarbamate
- ETHYL CADMATE: Cadmium diethyldithiocarbamate
- ZDMC: Zinc dimethyuldithiocarbamate (Methyl Zimate)
- TMQ: AGERITE RESIN D: Polymerized 1,2-dihydro-2,2,4-trimethylquinoline
- ADPA: AGERITE SUPERFLEX;
Diphenylamine-acetone reaction products, liquid
- ODPA: AGERITE STALITE S; Do-octyl diphenylamine
AGERITE SUPERLITE; Mixture of polybutylated bisphenol A
- ANTOZITE 67: N-(1,3-dimethylbutyl)-N'-phenyl-p-phenyl enediamine
- REOGEN: A mixture of an oil soluble sulfonic acid of high molecular weight with a paraffin oil
- SUNOLITE: Anti sun, checking wax made by the Witco Chemical Co.

Carbon black designations and nomenclature are consistent with ASTM designations according to Recommended Practice D2516 and/or industry standards as presented in VRH.

### EXAMPLE 17, 18

Passenger Tire Treads Composition (VRH,p 650).

| | Ex. 17 Radial Tire | Ex 18 Bias Tire |
|---|---|---|
| SBR 172 | 82.5 | 82.5 |
| BR 1252 | 55 | 55 |
| ISAF-HS Black N-234 | 70 | -- |
| HAF-HS Black N-339 | -- | 70 |
| REOGEN | 1 | 1 |
| Stearic Acid | 2 | 2 |
| AGERITE RESIN D | 2 | 2 |
| ANTOZITE 67 | 1 | 1 |
| Sunolite 240 | 3 | 3 |
| Zinc Oxide | 3 | 3 |
| Sulfur | 1.75 | 1.5 |
| DURAX | 1 | 1 |

### EXAMPLES 19, 20

Passenger Tire Black Sidewalls Compositions (VRH, p. 651.

| | Ex. 19 Wire Belt Radial Tire | Ex. 20 Bias Tire |
|---|---|---|
| SMR 5 | 50 | -- |
| BR 1220 | 50 | -- |
| SBR 1712 | -- | 82.5 |
| BR 1252 | -- | 50 |
| HAF Black N-330 | 50 | -- |
| GPF Black N-660 | -- | 70 |
| REOGEN | 2 | 1 |
| Naphthenic Oil | 10 | -- |
| Stearic Acid | 2 | 2 |
| AGERITE RESIN D | 2 | 2 |
| ANTOZITE 67 | 2 | 2 |
| Sunolite 240 | 3 | 3 |
| Zinc Oxide | 3 | 2 |
| Sulfur | 1.75 | 1.5 |
| AMAX | 1 | -- |
| DURAX | -- | 1 |

### EXAMPLE 21

Tire Bead Insulation Composition (VRH, p. 657).

| | |
|---|---|
| SBR 1500 | 100 |
| GPF Black N-660 | 100 |
| Highly Aromatic Oil | 10 |
| REOGEN | 2 |
| Rosin Oil | 10 |
| Stearic Acid | 2 |
| Zinc Oxide | 4 |
| AGERITE RESIN D | 2 |
| Sulfur | 3.6 |
| DURAX | 1 |

### EXAMPLE 22-24

Oil Resistant, Jacketed, V-Belt Composition (VRH, p. 700).

| Ingredient | Ex. 22 | Ex. 23 | Ex. 24 |
|---|---|---|---|
| | Base | Friction | Cushion |
| Neoprene GNA | 100 | 100 | 100 |
| Stearic Acid | 2 | 1 | 2 |
| Magnesium Oxide | 4 | 4 | 4 |
| AGERITE HP-S | 3 | 3 | 3 |
| N-650 Black | 40 | -- | 40 |
| N-774 Black | 30 | -- | -- |
| Conductive Black | -- | 30 | -- |
| Light Process Oil | 7.5 | 20 | 8 |
| Silica | -- | -- | 30 |
| Zinc Oxide | 5 | 5 | 5 |
| VANAX NP | .2 | -- | .25 |

### EXAMPLES 25, 26

Conveyor Belt Compounds (VRH. P. 704) useful for belt covers.

| | Ex. 25 | | Ex. 26 |
|---|---|---|---|
| | 1st Grade | | 2nd Grade |
| Smoked Sheet | 70 | Smoked Sheet | 50 |
| CIS-4 Polybutadiene | 30 | SBR 1500 | 50 |
| REOGEN | 1 | REOGEN | 1 |
| Stearic Acid | -- | Stearic Acid | 3 |
| Zinc Oxide | 2 | Zinx Oxide | 2.5 |
| OCTOATE Z | 3 | AGERITE RESIN D | 1.5 |
| AGERITE RESIN D | 1.5 | ANTOZITE 67F2 | 2 |
| ANTOZITE 67 F | 2 | Circo Light Oil | 4 |
| Circo Light Oil | 4 | Sunproofing Wax | 1.5 |
| Sunproofing Was | 1.5 | ISAF Black (N-220) | 45 |
| ISAF Black (N-220) | 45 | Sulfur | 2.5 |
| Sulfur | 2.5 | AMAX | 1.5 |
| AMAX | 1.5 | METHYL TUARDS | .2 |
| METHYL TUADS | .2 | | |

### EXAMPLES 27, 28

Conveyor Belt Compositions useful as friction and skim coat. (VRH, P. 705)

| | Ex. 27 | | Ex. 28 |
|---|---|---|---|
| | 1st Grade | | Heat Resistant |
| SBR 1500 | 75 | SBR 1500 | 100 |
| Smoked Sheet | 25 | Smoked Sheet | -- |
| REOGEN | 2 | REOGEN | 2 |
| Stearic Acid | 1 | Stearic Acid | 1 |
| Zinc Oxide | 2 | Zinc Oxide | 5 |
| AGERITE RESIN D | 1 | AGERITE RESIN D | 1.5 |
| RIO RESIN N | -- | Circo Light Oil | 10 |
| Paraflux | 7 | Paraflux | 7 |
| Sundex | 7 | Sundex 790 | 1.5 |
| FEF Black (N-550) | 20 | FEF Black (N-550) | 20 |
| SRF Black (N-770) | 25 | SRF Black (N-770) | 25 |
| AMAX | 1.25 | AMAX | -- |
| Sulfur | 2.25 | Sulfur | .15 |

### EXAMPLE 29

Rubber-Reclaim Steam House Tube and Cover Compositions (VRH, p. 719)

| | Ex. 29 |
|---|---|
| High Modulus Crepe | 60 |
| Reclaim (Whole Tire) | 80 |
| REOGEN | 3 |
| Stearic Acid | 1.5 |
| Zinc Oxide | 5 |
| AGERITE RESIN D | 2 |
| Coumarone Indene Resin | 2 |
| Rosin Oil | 1 |
| THERMAX (N-990) | 100 |
| Sulfur | 2 |
| ALTAX | 1.25 |
| METHYL TUADS | .125 |

## Claims

1. An elastomer composition reinforced with polyamide fibers, characterised in that the polyamide fibers provide 1 to 25 phr by weight of the composition, based on elastomer, and are from 0.1 to 1.0 inches (2.5 to 25.4 mm) long and have a birefringence value from 0.02 to 0.04.

2. A composition according to Claim 1 characterised in that it contains from 2 to 10 phr by weight of fibers.

3. A composition according to Claim 1 or 2 characterised in that the fibers are from 0.125 to 1.0 inches (3.2 to 25.4 mm) long.

4. A composition according to any one of Claims 1 to 3 characterised in that the elastomer is selected from natural rubber, synthetic polyisoprene, a copolymer of butadiene and acrylonitrile, a copolymer of butadiene and styrene, a copolymer of butadiene and alkyl acrylate, butyl rubber, ethylene-propylene rubber, EPDM rubber, fluorocarbon rubber, silicone rubber, chlorosulfonated polyethylene, polyacrylates, polyabutadiene, polychloroprene and mixtures thereof.

5. A composition according to any one of Claims 1 to 4 characterised in that it contains a particulate filler.

6. A composition according to any one of Claims 1 to 5 characterised in that the fibers have a fiber modulus of less than 1x10¹¹ dyne/cm² (10 GPa).

7. An article consisting of or comprising a composition according to any one of Claims 1 to 6 characterised in that the article is a tire, a power transmission belt, a conveyor belt, or mechanical goods.

8. An article according to Claim 7 which is a tire wherein at least one component of the tire comprising the composition according to any one of Claims 1 to 6 is selected from the tread, overlay, belt edge, bead filler, chaffer, sidewall and belt coat.

## Patentansprüche

1. Elastomere Zusammensetzung, die mit Polyamidfasern verstärkt ist, dadurch gekennzeichnet, daß die Polyamidfasern der Zusammensetzung 1 bis 25 phr an Gewicht, auf Basis des Elastomers, liefern und 0,1 bis 1,0 Zoll (2,5 bis 25,4 mm) lang sind und einen Doppelbrechungswert von 0,02 bis 0,04 besitzen.

2. Zusammensetzung nach Anspruch 1, dadurch gekennzeichnet, daß sie 2 bis 10 phr an Gewicht von Fasern enthält.

3. Zusammensetzung nach Anspruch 1 oder 2, dadurch gekennzeichnet, daß die Fasern 0,125 bis 1,0 Zoll (3,2 bis 25,4 mm) lang sind.

4. Zusammensetzung nach einem der Ansprüche 1 bis 3, dadurch gekennzeichnet, daß das Elastomer aus Naturgummi, synthetischem Polyisopren, einem Copolymer von Butadien und Acrylnitril, einem Copolymer von Butadien und Styrol, einem Copolymer von Butadien und Alkylacrylat, Butylgummi, Äthylen-Propylen-Gummi, EPDM-Gummi, Fluorkohlenstoffgummi, Silikongummi, chlorsulfoniertem Polyäthylen, Polyacrylaten, Polyabutadien, Polychloropren und Gemischen davon ausgewählt ist.

5. Zusammensetzung nach einem der Ansprüche 1 bis 4, dadurch gekennzeichnet, daß sie einen teilchenförmigen Füllstoff enthält.

6. Zusammensetzung nach einem der Ansprüche 1 bis 5, dadurch gekennzeichnet, daß die Fasern einen geringeren Fasermodul als 1x10¹¹ dyn/cm² (10 GPa) besitzen.

7. Gegenstand, der aus einer Zusammensetzung nach einem der Ansprüche 1 bis 6 besteht oder sie aufweist, dadurch gekennzeichnet, daß der Gegenstand ein Reifen, ein Kraftübertragungsriemen, ein Fördergurt oder ein mechanischer Artikel ist.

8. Gegenstand nach Anspruch 7, der ein Reifen ist, bei dem zumindest ein Bestandteil des Reifens, welcher die Zusammensetzung nach einem der Ansprüche 1 bis 6 aufweist, aus der Lauffläche, der Überdeckung, der Gurtkante, der Wulstfüllung, der Schale, der Seitenwand und der Gurtbeschichtung gewählt ist.

## Revendications

1. Composition élastomère renforcée par des fibres de polyamide, caractérisée en ce que les fibres de polyamide constituent 1 à 25 phr en poids de la composition, sur la base d'élastomère et ont une longueur de 2,5 à 25,4 mm (0,1 à 1,0 pouce) et ont une valeur de birefringence de 0,02 à 0,04.

2. Composition selon la revendication 1, caractérisée en ce qu'elle contient de 2 à 10 phr en poids de fibres.

3. Composition selon la revendication 1 ou 2, caractérisée en ce que les fibres ont une longueur de 3,2 à 25,4mm (0,125 à 1,0 pouce).

4. Composition selon l'une quelconque des revendications 1 à 3, caractérisée en ce que l'élastomère est choisi parmi du caoutchouc naturel, du polyisoprène synthétique,
un copolymère de butadiène et d'acrylonitrile, un copolymère de butadiène et de styrène, un copolymère de butadiène et d'acrylate d'alkyle, du caoutchouc de butyle, du caoutchouc d'éthylène et de propylène, du caoutchouc d'EPDM, du caoutchouc fluorocarboné, du caoutchouc de silicone, du polyéthylènechlorosulfoné, des polyacrylates, du polybutadiène, du polychloroprène et des mélanges de ceux-ci.

5. Composition selon l'une quelconque des revendications 1 à 4, caractérisée en ce qu'elle contient une charge particulaire.

6. Composition selon l'une quelconque des revendications 1 à 5, caractérisée en ce que les fibres ont un module fibreux de moins de 1 x 10¹¹ dynes/cm² (10 GPa).

7. Article constitué de ou comprenant une composition selon l'une quelconque des revendications 1 à 6, caractérisé en ce que l'article est un pneumatique, une courroie de transmission d'énergie motrice, une bande de manutention ou des articles mécaniques.

8. Article selon la revendication 7 qui est un pneumatique dans lequel au moins un composant du pneumatique comprenant la composition selon l'une quelconque des revendications 1 à 6 est choisi parmi la bande de roulement, l'enveloppe, le bord de courroie, la charge du talon, la bandelette du talon, la bande de roulement latérale et le revêtement de courroie.
